# NEUE EUROPÄISCHE PATENTSCHRIFT

(11) **EP 3 289 847 B2**
(45) Veröffentlichungstag und Bekanntmachung des Hinweises auf die Entscheidung über den Einspruch: **28.09.2022**
(45) Hinweis auf die Patenterteilung: 01.01.2020
(21) Anmeldenummer: 17187644.4
(22) Anmeldetag: 24.08.2017
(51) Int. Cl.: A01B 63/111, A01B 69/00, A01B 69/04

(54) **ANORDNUNG ZUR BEEINFLUSSUNG DER LAGE EINES LANDWIRTSCHAFTLICHEN ANBAUGERÄTS**
ARRANGEMENT FOR INFLUENCING THE POSITION OF AN AGRICULTURAL ATTACHMENT
ARRANGEMENT DESTINÉ À INFLUENCER L'EMPLACEMENT D'UN ÉQUIPEMENT AGRICOLE

(30) Priorität: 01.09.2016 DE 102016216515
(43) Veröffentlichungstag der Anmeldung: 07.03.2018
(73) Patentinhaber: Deere & Company, Moline, IL 61265 (US)
(72) Erfinder: Kremmer, Martin, 68163 Mannheim (DE); Gresch, Valentin, 68163 Mannheim (DE); Audenaert, Jorgen, 68163 Mannheim (DE)
(74) Vertreter: Dehnhardt, Florian Christopher

(56) Entgegenhaltungen:
- EP-A1- 0 845 198
- EP-A1- 1 068 784
- EP-A1- 2 502 477
- EP-A1- 2 732 686
- EP-A2- 2 042 276
- EP-B1- 2 126 757
- WO-A1-2008/098290
- WO-A1-2013/026661
- DE-A1- 4 001 495
- DE-A1- 10 140 383
- DE-A1- 19 747 949
- DE-A1- 19 945 853
- DE-A1-102008 005 191
- DE-A1-102014 206 233
- DE-C2- 19 544 112
- US-A- 4 825 956
- US-B1- 6 199 000

## Beschreibung

Die vorliegende Erfindung betrifft eine Anordnung zur Beeinflussung der Lage eines landwirtschaftlichen Anbaugeräts, mit einem Dreipunkt-Kraftheber, der einen zentralen Oberlenker sowie rechte und linke Unterlenker aufweist, mit Stellmitteln zur Längenverstellung des Oberlenkers sowie zur gemeinsamen und/oder seitenindividuellen Veränderung der Hubstellungen der beiden Unterlenker, mit einer Steuereinheit, die die Stellmittel zur Durchführung einer Lagekorrektur eines an dem Dreipunkt-Kraftheber anbringbaren landwirtschaftlichen Anbaugeräts ansteuert, und mit einer aus einem oder mehreren Ultraschall- oder Radarsensoren bestehenden Sensoranordnung zur Durchführung einer Abstandsmessung in einem an dem landwirtschaftlichen Anbaugerät vorgesehenen Bezugspunkt, deren Erfassungsbereich im Wesentlichen lotrecht zur Erdoberfläche weist, wobei die Steuereinheit die Lagekorrektur nach Maßgabe eines aus der Abstandsmessung ermittelten Istwerts einer Abstandsgröße, die einen räumlichen Abstand zwischen dem an dem landwirtschaftlichen Anbaugerät vorgesehenen Bezugspunkt gegenüber einem zugehörigen Abschnitt der Erdoberfläche repräsentiert, und eines für die Abstandsgröße vorgegebenen Sollwert durchführt.

Des Weiteren geht aus der DE 101 40 383 A1 eine Vorrichtung zur Regelung der Lage eines an einem Schlepper angebrachten Anbaugeräts hervor. Die Vorrichtung umfasst eine Dreipunkt-Geräteanbaueinrichtung mit einem längenverstellbaren Oberlenker und zwei einzeln in ihren Hubstellungen verstellbaren Unterlenkern. Ein Neigungssensor dient der Ermittlung einer Querneigung des Schleppers gegenüber der Erdhorizontalen. Die Signale des Neigungssensors werden einer Regeleinheit zugeführt, die bei Erkennung einer Querneigungsänderung des Schleppers jeweilige Kraftantriebe des Oberlenkers bzw. der Unterlenker der Dreipunkt-Geräteanbaueinrichtung derart ansteuert, dass die Querneigungsänderung am Anbaugerät ausgeglichen wird und dieses für eine vorbestimmte Wegstrecke seine Lage gegenüber der Erdoberfläche beibehält. Anschließend wird die vorherige Lage gegenüber dem Schlepper wiederhergestellt. Auf diese Weise lässt sich verhindern, dass sich das Anbaugerät bereits dann mit dem Schlepper zur Seite neigt, wenn sich dieses noch auf unverändertem Terrain befindet. Da zum Zwecke der Lagekorrektur lediglich relative Querneigungsänderungen berücksichtigt werden, bleibt insbesondere eine von Anfang an bestehende Fehlstellung des Anbaugeräts gegenüber einer zu bearbeitenden Feldoberfläche unerkannt.

Es ist daher Aufgabe der vorliegenden Erfindung, eine Anordnung der eingangs genannten Art dahingehend weiterzubilden, dass diese eine weiter verbesserte Lagekorrektur eines an einem Dreipunkt-Kraftheber anbringbaren landwirtschaftlichen Anbaugeräts ermöglicht.

Diese Aufgabe wird durch eine Anordnung mit den Merkmalen des Patentanspruchs 1 gelöst.

Die Anordnung zur Beeinflussung der Lage eines landwirtschaftlichen Anbaugeräts umfasst neben einem Dreipunkt-Kraftheber, der einen zentralen Oberlenker sowie rechte und linke Unterlenker aufweist, weiterhin Stellmittel zur Längenverstellung des Oberlenkers sowie zur gemeinsamen und/oder seitenindividuellen Veränderung der Hubstellungen der beiden Unterlenker, eine Steuereinheit, die die Stellmittel zur Durchführung einer Lagekorrektur eines an dem Dreipunkt-Kraftheber anbringbaren landwirtschaftlichen Anbaugeräts ansteuert, und eine aus einem oder mehreren Ultraschall- oder Radarsensoren bestehende Sensoranordnung zur Durchführung einer Abstandsmessung in einem an dem landwirtschaftlichen Anbaugerät vorgesehenen Bezugspunkt, deren Erfassungsbereich im Wesentlichen lotrecht zur Erdoberfläche weist. Die Steuereinheit führt die Lagekorrektur nach Maßgabe eines ermittelten Istwerts einer Abstandsgröße, die einen räumlichen Abstand zwischen dem an dem landwirtschaftlichen Anbaugerät vorgesehenen Bezugspunkt gegenüber einem zugehörigen Abschnitt der Erdoberfläche repräsentiert, und eines für die Abstandsgröße vorgegebenen Sollwerts durch. Erfindungsgemäß leitet die Steuereinheit den Sollwert aus einer entlang einer zu befahrenden Erdoberflächenkontur einzuhaltenden Arbeitshöhe und/oder Neigung des landwirtschaftlichen Anbaugeräts ab, wobei die Steuereinheit die einzuhaltende Arbeitshöhe und/oder Neigung des landwirtschaftlichen Anbaugeräts durch Bestimmung einer aktuellen Geoposition des Bezugspunkts und anschließende Referenzierung mit für die betreffende Geoposition hinterlegten Geoinformationen ermittelt. Die Bereitstellung der aktuellen Geoposition wie auch der für diese hinterlegten Geoinformationen erfolgt seitens eines mit der Steuereinheit in Verbindung stehenden satellitengestützten Navigationssystems, wobei die Steuereinheit die Stellmittel im Sinne einer Angleichung des Istwerts an den vorgegebenen Sollwert der Abstandsgröße ansteuert.

Dies ist beispielsweise bei der Bearbeitung eines Feldes entlang eines Hangs oder bei welligem Terrain von Vorteil, da ein automatisches Nachführen der Arbeitshöhe und/oder Neigung des landwirtschaftlichen Anbaugeräts entsprechend der zu befahrenden Erdoberflächenkontur ermöglicht wird.

Bei den Geoinformationen handelt es sich beispielsweise um Höhenund/oder Neigungsangaben der Erdoberfläche, die es ermöglichen, eine vorausschauende Lagekorrektur entlang der vorausliegenden Fahrspur durchzuführen. Hierbei können insbesondere die zur (mechanischen) Verstellung des Dreipunkt-Krafthebers erforderlichen Regelzeiten einbezogen werden. Die vorausliegende Fahrspur ergibt sich beispielsweise aus Lenkwinkel- und Geschwindigkeitsinformationen des Fahrzeuggespanns oder aber auf Grundlage einer von einem autonomen Lenksystem berechneten Trajektorie.

Da zum Zwecke der Lagekorrektur somit die absolute Lage des landwirtschaftlichen Anbaugeräts gegenüber der Erdoberfläche Berücksichtigung findet und nicht etwa nur deren relative Änderung, lässt sich eine mögliche Fehlstellung des landwirtschaftlichen Anbaugeräts gegenüber der Feldoberfläche verlässlich erkennen und durch entsprechende Ansteuerung der Stellmittel des Dreipunkt-Krafthebers automatisch ausgleichen.

Die Anordnung ist insbesondere Bestandteil eines landwirtschaftlichen Fahrzeuggespanns, das aus einem Traktor sowie einem an dem Dreipunkt-Kraftheber bzw. Dreipunkt-Geräteanbau des Traktors angebrachten landwirtschaftlichen Anbaugerät besteht. Bei letzterem handelt es sich entweder um ein frei getragenes Anbaugerät, beispielsweise ein Spritzgestänge, einen Düngerstreuer oder eine Mäheinheit, oder aber um ein bodeneingreifendes Anbaugerät, beispielsweise einen Pflug oder einer Egge. Bei all diesen landwirtschaftlichen Anbaugeräten hat die Lage gegenüber der zu bearbeitenden Feldoberfläche, also die Arbeitshöhe und/oder Neigung, maßgeblichen Einfluss auf das erzielte Arbeitsergebnis. Bei dem Bezugspunkt kann es sich entweder um eine gedachte oder tatsächliche Stelle an dem landwirtschaftlichen Anbaugerät handeln.

Die Abstandsmessung kann hierbei mittels eines einzelnen Abstandssensors punktförmig, mittels zweier Abstandssensoren linienförmig oder mittels dreier Abstandssensoren, vorzugsweise in einem Dreiecksverbund, flächig erfolgen. Im Falle einer punktförmigen Abstandsmessung lässt sich zumindest eine Aussage über die Entfernung des Bezugspunkts gegenüber dem zugehörigen Abschnitt der Erdoberfläche treffen, woraus sich unter Zugrundelegung der Anbaugerätegeometrie sowie der Position des Abstandssensors am landwirtschaftlichen Anbaugerät zugleich Rückschlüsse auf dessen aktuelle Arbeitshöhe ziehen lassen. Für den Fall einer linienförmigen bzw. flächigen Abstandsmessung kann durch Kombination der einzelnen Messergebnisse zusätzlich die Neigung des landwirtschaftlichen Anbaugeräts insbesondere entlang einer Anbaugerätelängsachse bzw. einer Anbaugerätequerachse ermittelt werden.

Hierbei sei angemerkt, dass zur Abstandsmessung anstelle eines Ultraschall- oder Radarsensors auch eine Stereokamera oder ein Laserscanner Verwendung finden kann, wobei beide Systeme prinzipbedingt eine räumliche Abstandsmessung erlauben. Daneben ist der Einsatz mechanischer Mittel zur Abstandsmessung, wie beispielsweise ein der Erdoberflächenkontur folgender Tastbügel oder dergleichen, denkbar.

Vorteilhafte Ausführungen der erfindungsgemäßen Anordnung gehen aus den Unteransprüchen hervor.

Optional erfolgt die Ermittlung des Istwerts der Abstandsgröße auf Grundlage einer in einem Hilfspunkt durchgeführten Abstandsmessung, wobei die Steuereinheit das Ergebnis der Abstandsmessung rechnerisch auf den Bezugspunkt rückführt. Im Falle eines aus einem Traktor sowie einem landwirtschaftlichen Anbaugerät bestehenden landwirtschaftlichen Fahrzeuggespanns kann sich der Hilfspunkt beispielsweise am Traktor befinden, die zur Abstandsmessung verwendete Sensoranordnung ist dann gemeinsam mit der Steuereinheit traktorseitig, insbesondere an einem Traktorchassis angeordnet. Aufgrund der räumlichen Nähe von Steuereinheit und Abstandssensoren lässt sich der Datenübertragungsaufwand gegenüber einer anbaugeräteseitigen Anbringung erheblich reduzieren. Auch ist es nicht erforderlich, jedes der in Frage kommenden landwirtschaftlichen Anbaugeräte mit eigenen Abstandssensoren auszustatten. Zur rechnerischen Rückführung bzw. Transformation des Ergebnisses der Abstandsmessung auf den anbaugeräteseitig vorgesehenen Bezugspunkt berücksichtigt die Steuereinheit dann neben der momentanen Orientierung des landwirtschaftlichen Anbaugeräts gegenüber dem Traktor bzw. des Traktorchassis unter anderem die als bekannt vorausgesetzten Geometrieverhältnisse des Traktorchassis, des Dreipunkt-Krafthebers sowie des daran angebrachten landwirtschaftlichen Anbaugeräts. Die momentane Orientierung des landwirtschaftlichen Anbaugeräts gegenüber dem Traktor bzw. dem Traktorchassis lässt sich insbesondere anhand eines Vergleichs von jeweils daran auftretenden Beschleunigungen bzw. durch sensorische Erfassung der momentanen Hubstellungen der Unterlenker sowie der momentanen Länge und Winkelstellung des Oberlenkers ableiten. Hierzu sind Traktor und landwirtschaftliches Anbaugerät mit Beschleunigungssensoren bzw. der Dreipunkt-Kraftheber mit entsprechenden Stellungssensoren oder anderen Mitteln zur Bestimmung der aktuellen Geometrie des Dreipunkt-Krafthebers ausgestattet.

Der Sollwert der Abstandsgröße kann über eine mit der Steuereinheit kommunizierende Benutzerschnittstelle manuell vorgebbar sein. Bei der Benutzerschnittstelle handelt es sich typischerweise um eine berührungsempfindliche Anzeigeeinheit, überdie sich der Sollwert der Abstandsgröße vom Bediener durch unmittelbare Eingabe eines entsprechenden numerischen Werts vorgeben lässt.

Zusätzlich oder alternativ ist der Sollwert der Abstandsgröße abhängig vom Anbaugerätetyp und/oder Anbaugerätemodell vorgegeben und in einem mit der Steuereinheit kommunizierenden Datenspeicher hinterlegt. Der Datenspeicher kann integraler Bestandteil der Steuereinheit sein, es kann sich jedoch auch um einen austauschbaren Datenträger (SD-Karte) oder eine zentrale Datenbank (Cloud) handeln, auf die die Steuereinheit drahtlos über eine entsprechende Schnittstelle zugreift. Die für die Abstandsgröße hinterlegten Sollwerte werden hierbei herstellerseitig auf der Grundlage von Labor- und Feldversuchen bestimmt. Genauer gesagt nimmt der Bediener über die Benutzerschnittstelle dann lediglich eine Auswahl des zu betreibenden Anbaugerätetyps und/oder Anbaugerätemodells vor, die eigentliche Zuordnung des damit korrespondierenden Sollwerts der Abstandsgröße erfolgt automatisch im Hintergrund.

Insbesondere können für jeden Anbaugerätetyp und/oder jedes Anbaugerätemodell mehrere Sollwerte für die Abstandsgröße hinterlegt sein, die verschiedenen Betriebssituationen Rechnung tragen. Die jeweilige Betriebssituation lässt sich zur entsprechenden Anpassung des Sollwerts der Abstandsgröße ebenfalls über die Benutzerschnittstelle auswählen.

Zusätzlich kann die Steuereinheit eine Parametrisierung des Sollwerts der Abstandsgröße in Abhängigkeit ermittelter Betriebszustände und/oder -einstellungen des Fahrzeuggespanns und/oder ermittelter Boden-, Bodenbedeckungs- und/oder Umgebungseigenschaften durchführen. Hierbei handelt es sich unter anderem um sensorisch erfasste und/oder extern bereitgestellte Informationen hinsichtlich der Fahrtgeschwindigkeit oder Fahrtbeschleunigung des Fahrzeuggespanns, von Arbeitseinstellungen des landwirtschaftlichen Anbaugeräts, der Bodenfeuchtigkeit, der Bodenart, der Umgebungstemperatur, der Bestandshöhe bzw. Bestandsdichte einer Bepflanzung, oder der Windgeschwindigkeit. Deren Wirkung auf die Lage des landwirtschaftlichen Anbaugeräts ist für den Bediener meist schwer abschätzbar, sodass eine automatische Berücksichtigung angesichts der erzielbaren Verbesserung der Arbeitsergebnisse einen erheblichen Komfortgewinn darstellt. Die Parametrisierung erfolgt hierbei mittels in dem Datenspeicher hinterlegter Tabellen oder Übertragungsfunktionen. Denkbar ist in diesem Zusammenhang auch eine gezielte Schrägstellung des landwirtschaftlichen Anbaugeräts, beispielsweise um Windeinflüsse, die zu Verwehungen bei der Ausbringung von Spritzmittel oder Dünger führen können, zu vermindern. Insbesondere kann es sich im Falle der Boden-, Bodenbedeckungs- und/oder Umgebungseigenschaften um georeferenzierte Informationen handeln, die gleichfalls in dem mit der Steuereinheit kommunizierenden Datenspeicher hinterlegt sind und sich von der Steuereinheit durch Abgleich einer mittels des satellitengestützten Navigationssystems bestimmten aktuellen Geoposition abrufen lassen.

Ferner kann die Steuereinheit mit einer Anordnung zur Anbaugeräteidentifikation in Verbindung stehen, wobei die Steuereinheit den Sollwert der Abstandsgröße in Abhängigkeit des Identifikationsergebnisses aus dem Datenspeicher auswählt. Eine manuelle Auswahl des Anbaugerätetyps und/oder Anbaugerätemodells zum Zwecke der Vorgabe des Sollwerts der Abstandsgröße erübrigt sich in diesem Fall. Die Anordnung zur Anbaugeräteidentifikation kann insbesondere einen dem Anbaugerät zugeordneten RFID-Transponder aufweisen, der mittels eines traktorseitig vorgesehenen RFID-Lesegeräts bezüglich der darin enthaltenen Identifikationsdaten auslesbar ist. Im Falle eines ISOBUS-fähigen landwirtschaftlichen Anbaugeräts ist alterativ auch eine Identifikation seitens der Steuereinheit durch Abfrage einer zugehörigen ISOBUS-Kennung möglich.

Bevorzugt sind die zur Veränderung der Hubstellungen der beiden Unterlenker vorgesehenen Stellmittel als längenverstellbare Hubstreben und/oder als Hubzylinder ausgebildet, wobei die längenverstellbare Hubstrebe zwei voneinander abgewandte erste und zweite Strebenabschnitte umfasst, die sich mittels eines hydraulischen oder elektrischen Stellantriebs (gegeneinander) ein- und ausfahren lassen. Genauer gesagt kann die Hubstrebe mit dem ersten Strebenabschnitt am Unterlenker und mit dem zweiten Strebenabschnitt an einem hydraulisch schwenkbaren Hebelarm des Dreipunkt-Krafthebers angelenkt sein. Durch (asymmetrisches) Ein- und Ausfahren der Hubstreben lässt sich die Neigung des landwirtschaftlichen Anbaugeräts entlang der Anbaugerätelängsachse wie auch die Arbeitshöhe des landwirtschaftlichen Anbaugeräts gezielt beeinflussen. Die Hubzylinder sind insbesondere hydraulisch betreibbar, wobei diese ebenfalls ein gemeinsames und/oder seitenindividuelles Heben und Senken der mit den Unterlenkern verbundenen Hebelarme und damit eine Anpassung der Neigung des landwirtschaftlichen Anbaugeräts entlang der Anbaugerätelängsachse wie auch der Arbeitshöhe des landwirtschaftlichen Anbaugeräts erlauben.

Des Weiteren können die dem längenverstellbaren Oberlenker zugeordneten Stellmittel als Hydraulikzylinder ausgebildet sein. In aller Regel handelt es sich um einen doppeltwirkenden Hydraulikzylinder, der eine bauliche Einheit mit dem Oberlenker bildet. Durch Ein- und Ausfahren des Hydraulikzylinders ist eine gezielte Beeinflussung der Neigung des landwirtschaftlichen Anbaugeräts entlang der Anbaugerätequerachse möglich.

Die erfindungsgemäße Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein Ausführungsbeispiel der erfindungsgemäßen Anordnung zur Beeinflussung der Lage eines landwirtschaftlichen Anbaugeräts, und
- Fig. 2: eine beispielhafte Arbeitssituation bei der Bearbeitung eines Felds entlang eines Hangs oder bei welligem Terrain.

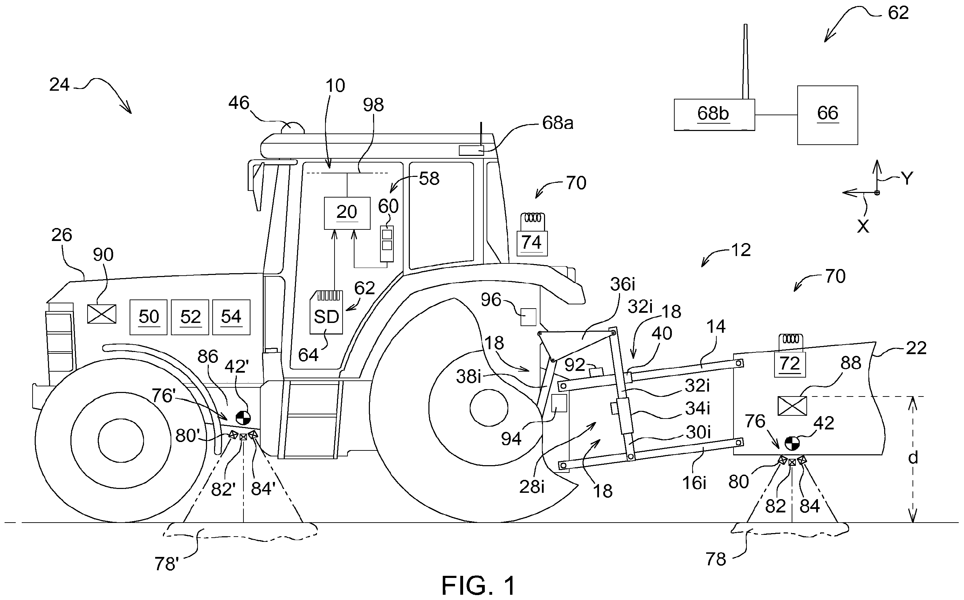

Fig. 1 zeigt ein Ausführungsbeispiel der erfindungsgemäßen Anordnung zur Beeinflussung der Lage eines landwirtschaftlichen Anbaugeräts als Bestandteil eines landwirtschaftlichen Fahrzeuggespanns.

Die Anordnung 10 umfasst neben einem Dreipunkt-Kraftheber 12 mit einem zentralen Oberlenker 14 sowie rechten und linken Unterlenkern 16i (i = r, 1) weiterhin Stellmittel 18 zur Längenverstellung des Oberlenkers 14 sowie zur gemeinsamen und/oder seitenindividuellen Veränderung der Hubstellungen der beiden Unterlenker 16i. Die Stellmittel 18 lassen sich seitens einer elektronischen Steuereinheit 20 zur Durchführung einer Lagekorrektur eines an dem Dreipunkt-Kraftheber 12 angebrachten landwirtschaftlichen Anbaugeräts 22 ansteuern. Die Unterlenker 16i sind in der Darstellung in Fig. 1 hintereinander angeordnet, sodass lediglich einer von beiden sichtbar ist.

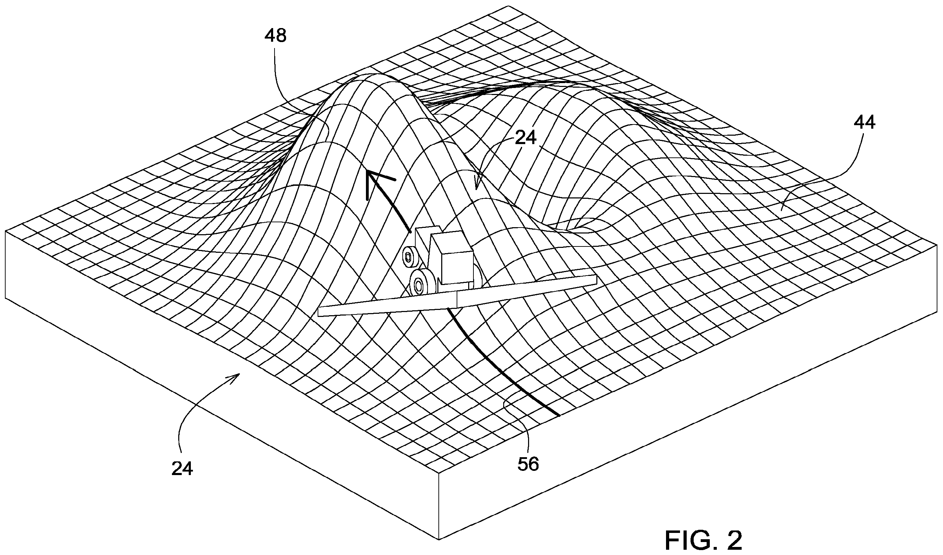

Genauer gesagt ist die Anordnung 10 Bestandteil eines landwirtschaftlichen Fahrzeuggespanns 24, das aus einem Traktor 26 sowie dem am Dreipunkt-Kraftheber 12 angebrachten landwirtschaftlichen Anbaugerät 22 besteht. Bei dem landwirtschaftlichen Anbaugerät 22 handelt es sich beispielhaft um ein Spritzgestänge (siehe hierzu auch Fig. 2).

Die zur Veränderung der Hubstellungen der beiden Unterlenker 16i vorgesehenen Stellmittel 18 sind als längenverstellbare Hubstreben 28i ausgebildet, wobei jede der längenverstellbaren Hubstreben 28i zwei voneinander abgewandte erste und zweite Strebenabschnitte 30i, 32i umfasst, die sich mittels eines hydraulischen oder elektrischen Stellantriebs 34i (gegeneinander) ein- und ausfahren lassen. Jede der Hubstreben 28i ist mit dem ersten Strebenabschnitt 30i am Unterlenker 16i und mit dem zweiten Strebenabschnitt 32i an einem hydraulisch schwenkbaren Hebelarm 36i des Dreipunkt-Krafthebers 12 angelenkt. Durch (asymmetrisches) Ein- und Ausfahren der Hubstreben 28i lässt sich die Neigung des landwirtschaftlichen Anbaugeräts 22 entlang der Anbaugerätelängsachse x wie auch die Arbeitshöhe des landwirtschaftlichen Anbaugeräts gezielt beeinflussen.

Daneben erlauben von den Stellmitteln 18 umfasste hydraulisch betriebene Hubzylinder 38i ein gemeinsames und/oder seitenindividuelles Heben und Senken der mit den Unterlenkern 16i verbundenen Hebelarme 36i und damit gleichfalls eine Anpassung der Neigung des landwirtschaftlichen Anbaugeräts 22 entlang der Anbaugerätelängsachse x wie auch der Arbeitshöhe des landwirtschaftlichen Anbaugeräts 22.

Auch wenn vorliegend der Vollständigkeit halber beide Möglichkeiten zur unabhängigen Veränderung der Hubstellungen der Unterlenker 16i dargestellt sind, dürfte in der Praxis lediglich eine von beiden vorgesehen sein. Auch sind die beiden Hebelarme 36i üblicherweise über eine Welle drehfest miteinander verbunden, sodass sich diese mittels der Hubzylinder 38i lediglich gemeinsam heben und senken lassen, mithin ausschließlich eine Anpassung der Arbeitshöhe des landwirtschaftlichen Anbaugeräts 22 möglich ist. In diesem Fall erfolgt zumindest die Beeinflussung der Neigung des landwirtschaftlichen Anbaugeräts 22 entlang der Anbaugerätelängsachse x mittels der Hubstreben 28i.

Des Weiteren sind die dem längenverstellbaren Oberlenker 14 zugeordneten Stellmittel 18 als Hydraulikzylinder 40 ausgebildet. Hierbei handelt es sich um einen doppeltwirkenden Hydraulikzylinder 40, der eine bauliche Einheit mit dem Oberlenker 14 bildet. Durch Ein- und Ausfahren des Hydraulikzylinders 40 ist eine gezielte Beeinflussung der Neigung des landwirtschaftlichen Anbaugeräts 22 entlang der Anbaugerätequerachse y möglich.

Die Steuereinheit 20 führt die Lagekorrektur nach Maßgabe eines ermittelten Istwerts einer Abstandsgröße, die einen räumlichen Abstand zwischen einem an dem landwirtschaftlichen Anbaugerät 22 vorgesehenen Bezugspunkt 42 gegenüber einem zugehörigen Abschnitt der Erdoberfläche repräsentiert, und eines für die Abstandsgröße vorgegebenen Sollwerts durch, indem die Steuereinheit 20 die Stellmittel 18 im Sinne einer Angleichung des Istwerts an den vorgegebenen Sollwert der Abstandsgröße ansteuert. Hierzu ist in der Steuereinheit 20 ein entsprechender Regelkreis implementiert, mittels dessen auf Grundlage eines Vergleichs zwischen dem Istwert und dem Sollwert der Abstandsgröße eine Minimierung einer zwischen den beiden Werten auftretenden Regelabweichung erfolgt.

Bei dem Bezugspunkt 42 handelt es sich entweder um eine gedachte oder tatsächliche Stelle an dem landwirtschaftlichen Anbaugerät 22.

Da zum Zwecke der Lagekorrektur somit die absolute Lage des landwirtschaftlichen Anbaugeräts 22 gegenüber der Erdoberfläche Berücksichtigung findet und nicht etwa nur deren relative Änderung, lässt sich eine mögliche Fehlstellung des landwirtschaftlichen Anbaugeräts 22 gegenüber der Feldoberfläche verlässlich erkennen und durch entsprechende Ansteuerung der Stellmittel 18 des Dreipunkt-Krafthebers 12 automatisch ausgleichen.

Nachfolgend soll auf die Ermittlung des Sollwerts sowie des Istwerts der Abstandsgröße näher eingegangen werden. Diesbezüglich komme mehrere Möglichkeiten in Frage, die für sich oder auch in Kombination miteinander verwirklicht sein können.

### Ermittlung des Sollwerts der Abstandsgröße

Für den Fall der in Fig. 2 dargestellten Arbeitssituation des landwirtschaftlichen Fahrzeuggespanns 24, bei der eine Bearbeitung eines Felds (Ausbringung eines Spritzmittels) entlang eines Hangs oder bei welligem Terrain erfolgt, leitet die Steuereinheit 20 den Sollwert der Abstandsgröße aus einer entlang einer zu befahrenden Erdoberflächenkontur 44 einzuhaltenden Arbeitshöhe und/oder Neigung des landwirtschaftlichen Anbaugeräts 22 ab.

Die Steuereinheit 20 ermittelt die einzuhaltende Arbeitshöhe und/oder Neigung des landwirtschaftlichen Anbaugeräts 22 durch Bestimmung einer aktuellen Geoposition des Bezugspunkts 42 und anschließende Referenzierung mit für die betreffende Geoposition hinterlegten Geoinformationen. Die Bereitstellung der aktuellen Geoposition wie auch der für diese hinterlegten Geoinformationen erfolgt seitens eines mit der Steuereinheit 20 in Verbindung stehenden satellitengestützten Navigationssystems 46. Bei den Geoinformationen handelt es sich beispielsweise um Höhen- und/oder Neigungsangaben der Erdoberfläche, die es ermöglichen, eine vorausschauende Lagekorrektur entlang einer vorausliegenden Fahrspur 48 durchzuführen. Hierbei werden die zur (mechanischen) Verstellung des Dreipunkt-Krafthebers 12 erforderlichen Regelzeiten einbezogen. Die vorausliegende Fahrspur 48 ergibt sich aus Lenkwinkel- und Geschwindigkeitsinformationen des landwirtschaftlichen Fahrzeuggespanns 24, die von der Steuereinheit 20 aus Signalen eines Lenkwinkelsensors 50 bzw. von Raddrehzahlsensoren 52 abgeleitet werden, oder aber auf Grundlage einer von einem autonomen Lenksystem 54 berechneten Trajektorie 56.

Ungeachtet dessen ist der Sollwert der Abstandsgröße über eine mit der Steuereinheit 20 kommunizierende Benutzerschnittstelle 58 manuell vorgebbar. Bei der Benutzerschnittstelle 58 handelt es sich um eine berührungsempfindliche Anzeigeeinheit 60, über die sich der Sollwert der Abstandsgröße vom Bediener durch unmittelbare Eingabe eines entsprechenden numerischen Werts vorgeben lässt.

Zusätzlich oder alternativ ist der Sollwert der Abstandsgröße abhängig vom Anbaugerätetyp und/oder Anbaugerätemodell vorgegeben und in einem mit der Steuereinheit 20 kommunizierenden Datenspeieher 62 hinterlegt. Der Datenspeicher 62 ist in üblicherweise integraler Bestandteil der Steuereinheit 20, im vorliegenden Fall handelt es sich jedoch um einen austauschbaren Datenträger 64 (SD-Karte) oder eine zentrale Datenbank 66 (Cloud), auf die die Steuereinheit 20 drahtlos über eine entsprechende Schnittstelle 68a, 68b zugreift. Die für die Abstandsgröße hinterlegten Sollwerte werden hierbei herstellerseitig auf der Grundlage von Labor- und Feldversuchen bestimmt. Genauer gesagt nimmt der Bediener über die Benutzerschnittstelle 58 dann lediglich eine Auswahl des zu betreibenden Anbaugerätetyps und/oder Anbaugerätemodells vor, die eigentliche Zuordnung des damit korrespondierenden Sollwerts der Abstandsgröße erfolgt automatisch im Hintergrund.

Darüber hinaus sind für jeden Anbaugerätetyp und/oder jedes Anbaugerätemodell mehrere Sollwerte für die Abstandsgröße hinterlegt, die verschiedenen Betriebssituationen Rechnung tragen. Die jeweilige Betriebssituation lässt sich zur entsprechenden Anpassung des Sollwerts der Abstandsgröße ebenfalls über die Benutzerschnittstelle 58 auswählen.

Optional steht die Steuereinheit 20 mit einer Anordnung zur Anbaugeräteidentifikation 70 in Verbindung, wobei die Steuereinheit 20 den Sollwert der Abstandsgröße in Abhängigkeit des Identifikationsergebnisses aus dem Datenspeicher 62 auswählt. Eine manuelle Auswahl des Anbaugerätetyps und/oder Anbaugerätemodells zum Zwecke der Vorgabe des Sollwerts der Abstandsgröße erübrigt sich in diesem Fall. Die Anordnung zur Anbaugeräteidentifikation 70 weist einen dem landwirtschaftlichen Anbaugerät 22 zugeordneten RFID-Transponder 72 auf, der mittels eines traktorseitig vorgesehenen RFID-Lesegeräts 74 bezüglich der darin enthaltenen Identifikationsdaten auslesbar ist.

Des Weiteren führt die Steuereinheit 20 eine Parametrisierung des Sollwerts der Abstandsgröße in Abhängigkeit ermittelter Betriebszustände und/oder -einstellungen des Fahrzeuggespanns wie auch ermittelter Boden-, Bodenbedeckungs- und/oder Umgebungseigenschaften durch. Bei den ermittelten Boden-, Bodenbedeckungs- und/oder Umgebungseigenschaften handelt es sich unter anderem um sensorisch erfasste und/oder extern bereitgestellte Informationen hinsichtlich der Fahrtgeschwindigkeit oder Fahrtbeschleunigung des Fahrzeuggespanns 24, von Arbeitseinstellungen des landwirtschaftlichen Anbaugeräts 22, der Bodenfeuchtigkeit, der Bodenart, der Umgebungstemperatur, der Bestandshöhe bzw. Bestandsdichte einer Bepflanzung, oder der Windgeschwindigkeit. Deren Wirkung auf die Lage des landwirtschaftlichen Anbaugeräts 22 ist für den Bediener meist schwer abschätzbar, sodass eine automatische Berücksichtigung angesichts der erzielbaren Verbesserung der Arbeitsergebnisse einen erheblichen Komfortgewinn darstellt. Die Parametrisierung erfolgt hierbei mittels in dem Datenspeicher 62 hinterlegter Tabellen oder Übertragungsfunktionen. Denkbar ist in diesem Zusammenhang auch eine gezielte Schrägstellung des landwirtschaftlichen Anbaugeräts 22, beispielsweise um Windeinflüsse, die zu Verwehungen bei der Ausbringung von Spritzmittel führen können, zu vermindern. Bei den Boden-, Bodenbedeckungs- und/oder Umgebungseigenschaften handelt es sich um georeferenzierte Informationen, die gleichfalls in dem mit der Steuereinheit 20 kommunizierenden Datenspeicher 62 hinterlegt sind und von der Steuereinheit 20 durch Abgleich einer mittels des satellitengestützten Navigationssystems 46 bestimmten aktuellen Geoposition abgerufen werden.

### Ermittlung des Istwerts der Abstandsgröße

Die Ermittlung des Istwerts der Abstandsgröße erfolgt auf Grundlage einer im Bezugspunkt 42 durchgeführten Abstandsmessung.

Hierzu dient im vorliegenden Fall eine aus einem oder mehreren Ultraschall- oder Radarsensoren bestehende Sensoranordnung 76, deren Erfassungsbereich 78 im Wesentlichen lotrecht zur Erdoberfläche weist. Die Abstandsmessung kann hierbei mittels eines einzelnen Abstandssensors 80 punktförmig, mittels zweier Abstandssensoren 80, 82 linienförmig oder aber mittels dreier Abstandssensoren 80, 82, 84 in einem Dreiecksverbund flächig erfolgen. Im Falle einer punktförmigen Abstandsmessung lässt sich zumindest eine Aussage über die Entfernung des Bezugspunkts 42 gegenüber dem zugehörigen Abschnitt der Erdoberfläche treffen, woraus sich unter Zugrundelegung der Anbaugerätegeometrie sowie der Position des Abstandssensors 80 am landwirtschaftlichen Anbaugerät 22 zugleich Rückschlüsse auf dessen aktuelle Arbeitshöhe ziehen lassen. Für den Fall einer linienförmigen bzw. flächigen Abstandsmessung kann durch Kombination der einzelnen Messergebnisse zusätzlich die aktuelle Neigung des landwirtschaftlichen Anbaugeräts 22 entlang der Anbaugerätelängsachse x bzw. der Anbaugerätequerachse y ermittelt werden. Bei der Abstandsgröße handelt es sich dann um einen Vektor der Gestalt A(d, a, β), wobei d die Arbeitshöhe, α die Neigung entlang der Anbaugerätelängsachse x und β die Neigung entlang der Anbaugerätequerachse y darstellt. Der in der Steuereinheit 20 implementierte Regelkreis ermittelt dementsprechend aus der sich aus dem Sollwert A̅ₛₒₗₗ und dem Istwert A̅ᵢₛₜ der Abstandsgröße ergebenden Regelabweichung eine zur Minimierung geeignete Stellgröße, die die Grundlage zur Ansteuerung der Stellmittel 18 bildet, mithin |A̅ₛₒₗₗ-A̅ᵢₛₜ| → 0.

Abweichend erfolgt die Ermittlung des Istwerts der Abstandsgröße auf Grundlage einer in einem Hilfspunkt 42' durchgeführten Abstandsmessung, wobei die Steuereinheit 20 das Ergebnis der Abstandsmessung rechnerisch auf den Bezugspunkt 42 rückführt. Dieser Fall ist in Fig. 1 strichliniert wiedergegeben. Der Hilfspunkt 42' befindet sich beispielsgemäß am Traktor 26, die zur Abstandsmessung verwendete Sensoranordnung 76' einschließlich der davon umfassten Abstandssensoren 80', 82', 84' ist dann gemeinsam mit der Steuereinheit 20 traktorseitig, insbesondere an einem Traktorchassis 86 angeordnet. Der Erfassungsbereich 78' der Sensoranordnung 76' ist gleichfalls im Wesentlichen lotrecht zur Erdoberfläche orientiert. Aufgrund der räumlichen Nähe von Steuereinheit 20 und Sensoranordnung 76' lässt sich der Datenübertragungsaufwand gegenüber einer anbaugeräteseitigen Anbringung erheblich reduzieren. Auch ist es nicht erforderlich, jedes der in Frage kommenden landwirtschaftlichen Anbaugeräte mit eigenen Abstandssensoren auszustatten. Zur rechnerischen Rückführung bzw. Transformation des Ergebnisses der Abstandsmessung auf den anbaugeräteseitig vorgesehenen Bezugspunkt 42 berücksichtigt die Steuereinheit 20 dann neben der momentanen Orientierung des landwirtschaftlichen Anbaugeräts 22 gegenüber dem Traktorchassis 86 unter anderem die als bekannt vorausgesetzten Geometrieverhältnisse des Traktorchassis 86, des Dreipunkt-Krafthebers 12 sowie des daran angebrachten landwirtschaftlichen Anbaugeräts 22. Die momentane Orientierung des landwirtschaftlichen Anbaugeräts 22 gegenüber dem Traktorchassis 86 wird anhand eines Vergleichs von jeweils daran auftretenden Beschleunigungen bzw. durch sensorische Erfassung der momentanen Hubstellungen der Unterlenker 16i sowie der momentanen Länge und Winkelstellung des Oberlenkers 14 abgeleitet. Hierzu sind Traktor 26 und landwirtschaftliches Anbaugerät 22 mit Beschleunigungssensoren 88, 90 bzw. der Dreipunkt-Kraftheber 12 mit entsprechenden Stellungssensoren 92, 94, 96 ausgestattet, deren Signale der Steuereinheit 20 zur Auswertung zugeführt werden.

Schließlich sei angemerkt, dass die zwischen der Steuereinheit 20 und den übrigen Komponenten der Anordnung 10 vorgesehenen Datenleitungen der Übersichtlichkeit halber nicht dargestellt sind. Diese stehen über einen CAN-Datenbus 98 des Traktors 26 bzw. über eine sich auf das landwirtschaftliche Anbaugerät 22 erstreckende ISOBUS-Erweiterung mit der Steuereinheit 20 in Datenaustauschverbindung.

## Patentansprüche

1. Anordnung zur Beeinflussung der Lage eines landwirtschaftlichen Anbaugeräts, mit einem Dreipunkt-Kraftheber (12), der einen zentralen Oberlenker (14) sowie rechte und linke Unterlenker (16r, 16l) aufweist, mit Stellmitteln (18) zur Längenverstellung des Oberlenkers (14) sowie zur gemeinsamen und/oder seitenindividuellen Veränderung der Hubstellungen der beiden Unterlenker (16r, 16l), mit einer Steuereinheit (20), die die Stellmittel (18) zur Durchführung einer Lagekorrektur eines an dem Dreipunkt-Kraftheber (12) anbringbaren landwirtschaftlichen Anbaugeräts (22) ansteuert, und mit einer aus einem oder mehreren Ultraschall- oder Radarsensoren bestehenden Sensoranordnung (76) zur Durchführung einer Abstandsmessung in einem an dem landwirtschaftlichen Anbaugerät (22) vorgesehenen Bezugspunkt (42), deren Erfassungsbereich (78) im Wesentlichen lotrecht zur Erdoberfläche weist, wobei die Steuereinheit (20) die Lagekorrektur nach Maßgabe eines aus der Abstandsmessung ermittelten Istwerts (A̅ᵢₛₜ) einer Abstandsgröße, die einen räumlichen Abstand zwischen dem an dem landwirtschaftlichen Anbaugerät (22) vorgesehenen Bezugspunkt (42) gegenüber einem zugehörigen Abschnitt der Erdoberfläche repräsentiert, und eines für die Abstandsgröße vorgegebenen Sollwerts (A̅ₛₒₗₗ) durchführt, **dadurch gekennzeichnet, dass** die Steuereinheit (20) den Sollwert (A̅ₛₒₗₗ) aus einer entlang einer zu befahrenden Erdoberflächenkontur (44) einzuhaltenden Arbeitshöhe (d) und/oder Neigung (α, β) des landwirtschaftlichen Anbaugeräts (22) ableitet, wobei die Steuereinheit (20) die einzuhaltende Arbeitshöhe (d) und/oder Neigung (α, β) des landwirtschaftlichen Anbaugeräts (22) durch Bestimmung einer aktuellen Geoposition des Bezugspunkts (42) und anschließende Referenzierung mit für die betreffende Geoposition hinterlegten Geoinformationen ermittelt, wobei die Bereitstellung der aktuellen Geoposition wie auch der für diese hinterlegten Geoinformationen seitens eines mit der Steuereinheit (20) in Verbindung stehenden satellitengestützten Navigationssystems (46) erfolgt, wobei die Steuereinheit (20) die Stellmittel (18) im Sinne einer Angleichung des Istwerts (A̅ᵢₛₜ) an den Sollwert (A̅ₛₒₗₗ) der Abstandsgröße ansteuert.

2. Anordnung nach Anspruch 1, **dadurch gekennzeichnet, dass** die Steuereinheit (20) die einzuhaltende Arbeitshöhe (d) und/oder Neigung (a, β) des landwirtschaftlichen Anbaugeräts (22) durch Bestimmung einer aktuellen Geoposition des Bezugspunkts (42) und anschließende Referenzierung mit für die betreffende Geoposition hinterlegten Geoinformationen ermittelt.

3. Anordnung nach Anspruch 1 oder 2, **dadurch gekennzeichnet, dass** die Ermittlung des Istwerts (A̅ᵢₛₜ) der Abstandsgröße auf Grundlage einer in einem Hilfspunkt (42') durchgeführten Abstandsmessung erfolgt, wobei die Steuereinheit (20) das Ergebnis der Abstandsmessung rechnerisch auf den Bezugspunkt (42) rückführt.

4. Anordnung nach wenigstens einem der vorhergehenden Ansprüche, **dadurch gekennzeichnet, dass** der Sollwert (A̅ₛₒₗₗ) der Abstandsgröße über eine mit der Steuereinheit (20) kommunizierende Benutzerschnittstelle (58) manuell vorgebbar ist.

5. Anordnung nach wenigstens einem der vorhergehenden Ansprüche, **dadurch gekennzeichnet, dass** der Sollwert (A̅ₛₒₗₗ) der Abstandsgröße abhängig vom Anbaugerätetyp und/oder Anbaugerätemodell vorgegeben und in einem mit der Steuereinheit (20) kommunizierenden Datenspeicher (62) hinterlegt ist.

6. Anordnung nach Anspruch 5, **dadurch gekennzeichnet, dass** die Steuereinheit (20) eine Parametrisierung des Sollwerts (A̅ₛₒₗₗ) der Abstandsgröße in Abhängigkeit ermittelter Betriebszustände und/oder -einstellungen des Fahrzeuggespanns (24) und/oder ermittelter Boden-, Bodenbedeckungs- und/oder Umgebungseigenschaften vornimmt.

7. Anordnung nach Anspruch 5 oder 6, **dadurch gekennzeichnet, dass** die Steuereinheit (20) mit einer Anordnung zur Anbaugeräteidentifikation (70) in Verbindung steht, wobei die Steuereinheit (20) den Sollwert (A̅ₛₒₗₗ) der Abstandsgröße in Abhängigkeit des Identifikationsergebnisses aus dem Datenspeicher (62) auswählt.

8. Anordnung nach wenigstens einem der vorhergehenden Ansprüche, **dadurch gekennzeichnet, dass** das zur Veränderung der Hubstellungen der beiden Unterlenker (16r, 161) vorgesehene Stellmittel (18) als längenverstellbare Hubstrebe (28r, 281) ausgebildet ist, wobei die längenverstellbare Hubstrebe (28r, 281) zwei voneinander abgewandte erste und zweite Strebenabschnitte (30r, 301, 32r, 321) umfasst, die sich mittels eines hydraulischen oder elektrischen Stellantriebs (34r, 341) gegeneinander ein- und ausfahren lassen.

9. Anordnung nach wenigstens einem der vorhergehenden Ansprüche, **dadurch gekennzeichnet, dass** das dem längenverstellbaren Oberlenker (14) zugeordnete Stellmittel (18) als Hydraulikzylinder (40) ausgebildet ist.

10. Landwirtschaftliches Fahrzeuggespann, bestehend aus einem Traktor (26) sowie einem daran angebrachten landwirtschaftlichen Anbaugerät (22), mit einer Anordnung (10) nach wenigstens einem der vorhergehenden Ansprüche.

## Claims

1. Arrangement for influencing the position of an agricultural attachment, having a three-point hydraulic lift (12) which has a central top link (14) and right-hand and left-hand lower links (16r, 16l),with actuator means (18) for the longitudinal adjustment of the top link (14) and for the common and/or side-specific changing of the lift positions of the two lower links (16r, 16l),with a control unit (20) which actuates the actuator means (18) to carry out a position correction of an agricultural attachment (22) which can be attached to the three-point hydraulic lift (12), and having a sensor arrangement (76) which is composed of one or more ultrasonic or radar sensors and has the purpose of carrying out a distance measurement at a reference point (42) provided on the agricultural attachment (22), the sensing range (78) of which points essentially perpendicularly with respect to the surface of the earth, wherein the control unit (20) carries out the position correction in accordance with an actual value (*̅A̅*̅act), determined from the distance measurement, of a distance variable which represents a spatial distance between the reference point (42), provided on the agricultural attachment (22), with respect to an associated section of the surface of the earth, and a setpoint value (*̅A̅*̅ₛₑₜₚ) which is specified for the distance variable, **characterized in that** the control unit (20) derives the setpoint value (*̅A̅*̅ₛₑₜₚ) from a working height (d) and/or inclination (α, β), to be maintained along a contour (44) of the surface of the earth which is to be travelled along, of the agricultural attachment (22), wherein the control unit (20) determines the working height (d) and/or inclination (α, β), to be maintained, of the agricultural attachment (22) by determining a current geolocation of the reference point (42) and subsequent referencing with geo-information which is stored for the respective geolocation, wherein the provision of the current geolocation as well as of the geo-information which is stored for it is carried out by a satellite-based navigation system (46) which is connected to the control unit (20), wherein the control unit (20) actuates the actuator means (18) to approximate the actual value (*̅A̅*̅_{act}) to the setpoint value (*̅A̅*̅ₛₑₜₚ) of the distance variable.

2. Arrangement according to Claim 1, **characterized in that** the control unit (20) determines the working height (d) and/or inclination (α, β), to be maintained, of the agricultural attachment (22) by determining a current geolocation of the reference point (42) and subsequent referencing with geo-information which is stored for the respective geolocation.

3. Arrangement according to Claim 1 or 2, **characterized in that** the actual value (*̅A̅*̅_{act}) of the distance variable is determined on the basis of a distance measurement which is carried out at an auxiliary point (42'), wherein the control unit (20) returns the result of the distance measurement computationally to the reference point (42).

4. Arrangement according to at least one of the preceding claims, **characterized in that** the setpoint value (*̅A̅*̅ₛₑₜₚ) of the distance variable can be specified manually via a user interface (58) which communicates with the control unit (20).

5. Arrangement according to at least one of the preceding claims, **characterized in that** the setpoint value (*̅A̅*̅ₛₑₜₚ) of the distance variable is specified in accordance with the attachment type and/or attachment model and is stored in a data memory (62) which communicates with the control unit (20).

6. Arrangement according to Claim 5, **characterized in that** the control unit (20) performs parameterization of the setpoint value (*̅A̅*̅ₛₑₜₚ) of the distance variable in accordance with determined operating states and/or operating settings of the vehicle combination (24) and/or determined properties of the ground, properties of the ground coverage and/or properties of the surroundings.

7. Arrangement according to Claim 5 or 6, **characterized in that** the control unit (20) is connected to an arrangement for attachment identification (70), wherein the control unit (20) selects the setpoint value (*̅A̅*̅ₛₑₜₚ) of the distance variable in accordance with the identification result from the data memory (62).

8. Arrangement according to at least one of the preceding claims, **characterized in that** the actuator means (18) which is provided for changing the lift positions of the two lower links (16r, 16l) is embodied as a longitudinally adjustable lifting strut (28r, 28l), wherein the longitudinally adjustable lifting strut (28r, 28l) comprises two first and second strut sections (30r, 301, 32r, 32l) which face away from one another and which can be retracted and extended with respect to one another by means of a hydraulic or electric actuator drive (34r, 34l) .

9. Arrangement according to at least one of the preceding claims, **characterized in that** the actuator means (18) which is assigned to the longitudinally adjustable top link (14) is embodied as a hydraulic cylinder (40).

10. Agricultural vehicle combination, composed of a tractor (26) and an agricultural attachment (22) which is mounted thereon, having an arrangement (10) according to at least one of the preceding claims.

## Revendications

1. Agencement destiné à influencer la position d'un équipement agricole, comprenant un relevage trois points (12) qui comporte un bras supérieur central (14) ainsi que des bras inférieurs droit et gauche (16r, 16l),comprenant des moyens de réglage (18) destinés à régler la longueur du bras supérieur (14) ainsi qu'à modifier conjointement et/ou individuellement sur les côtés les positions de levage des deux bras inférieurs (16r, 16l),comprenant une unité de commande (20) qui commande les moyens de réglage (18) pour effectuer un réglage de la position d'un équipement agricole (22) qui peut être fixé au relevage trois points (12), et comprenant un agencement de capteurs (76), constitué d'un ou plusieurs capteurs à ultrasons ou radar, destiné à effectuer une mesure de distance dans un point de référence (42) prévu sur l'équipement agricole (22), dont la zone de détection (78) est orientée sensiblement perpendiculairement à la surface du sol, dans lequel l'unité de commande (20) effectue la correction de position conformément à une valeur réelle (*̅A̅*̅ᵢₛₜ), déterminée à partir de la mesure de distance, d'une grandeur de distance représentant une distance spatiale entre un point de référence (42) prévu sur l'équipement agricole (22) et une partie associée de la surface terrestre, et à une valeur de consigne (*̅A̅*̅ₛₒₗₗ) prédéterminée pour la grandeur de distance,
**caractérisé en ce que** l'unité de commande (20) détermine la valeur de consigne (*̅A̅*̅ₛₒₗₗ) à partir d'une hauteur de travail (d) et/ou d'une inclinaison (□, □) de l'équipement agricole (22), devant être maintenue le long d'un contour de surface du sol (44) devant être parcouru, dans lequel l'unité de commande (20) détermine la hauteur de travail (d) et/ou l'inclinaison (□, □) de l'outil agricole (22) qui doivent être maintenues en déterminant une position géographique actuelle du point de référence (42) puis en faisant référence à des informations géographiques enregistrées pour la position géographique concernée, dans lequel la fourniture de la géolocalisation actuelle ainsi que des informations géographiques stockées pour celle-ci est effectuée du côté d'un système de navigation par satellite (46) relié à l'unité de commande (20), dans lequel l'unité de commande (20) commande les moyens de réglage (18) dans le sens d'une égalisation entre la valeur réelle (*̅A̅*̅ᵢₛₜ) et la valeur de consigne (*̅A̅*̅ₛₒₗₗ) de la grandeur de distance.

2. Agencement selon la revendication 1, **caractérisé en ce que** l'unité de commande (20) détermine la hauteur de travail (d) et/ou l'inclinaison (□, □) de l'équipement agricole (22) qui doivent être maintenues en déterminant une position géographique actuelle du point de référence (42) et en faisant ensuite référence aux informations géographiques enregistrées pour la position géographique concernée.

3. Agencement selon la revendication 1 ou 2, **caractérisé en ce que** la valeur réelle (*̅A̅*̅ᵢₛₜ) de la détermination de la grandeur de distance est effectuée sur la base d'une mesure de distance effectuée en un point auxiliaire (42'), dans lequel l'unité de commande (20) ramène par calcul le résultat de la mesure de distance au point de référence (42).

4. Agencement selon au moins l'une des revendications précédentes, **caractérisé en ce que** la valeur de consigne (*̅A̅*̅ₛₒₗₗ) de la grandeur de distance peut être prédéfinie manuellement par le biais d'une interface utilisateur (58) en communication avec l'unité de commande (20).

5. Agencement selon au moins l'une des revendications précédentes, **caractérisé en ce que** la valeur de consigne (*̅A̅*̅ₛₒₗₗ) de la grandeur de distance est prédéfinie en fonction du type et/ou du modèle d'équipement et est enregistrée dans une mémoire de données (62) en communication avec l'unité de commande (20).

6. Agencement selon la revendication 5, **caractérisé en ce que** l'unité de commande (20) effectue un paramétrage de la valeur de consigne (*A̅*ₛₒₗₗ) de la grandeur de distance en fonction d'états et/ou de réglages de fonctionnement déterminés de l'attelage (24) et/ou de propriétés déterminées du sol, du revêtement du sol et/ou de l'environnement.

7. Agencement selon la revendication ou 6, **caractérisé en ce que** l'unité de commande (20) est reliée à un agencement destiné à identifier un équipement (70), dans lequel l'unité de commande (20) sélectionne la valeur de consigne (*A̅*ₛₒₗₗ) de la grandeur de distance dans la mémoire de données (62) en fonction du résultat de l'identification.

8. Agencement selon au moins l'une des revendications précédentes, **caractérisé en ce que** le moyen de réglage (18) prévu pour modifier les positions de levage des deux bras inférieurs (16r, 16l) est réalisé sous la forme d'une tige de levage réglable en longueur (28r, 28l), dans lequel la tige de levage réglable en longueur (28r, 28l) comprend deux première et deuxième parties de tige (30r, 30l, 32r, 32l) qui sont tournées à l'opposé l'une de l'autre et peuvent être rentrées et sorties l'une par rapport à l'autre par un entraînement hydraulique ou électrique (34r, 34l).

9. Agencement selon au moins l'une des revendications précédentes, **caractérisé en ce que** le moyen de réglage (18) associé au bras supérieur réglable en longueur (14) est réalisé sous la forme d'un vérin hydraulique (40).

10. Attelage de véhicules agricoles constitué d'un tracteur (26) et d'un équipement agricole (22) relié à celui-ci, comprenant un agencement (10) selon au moins l'une des revendications précédentes.
